# EUROPÄISCHE PATENTSCHRIFT

(11) **EP 0 562 472 B1**
(45) Veröffentlichungstag und Bekanntmachung des Hinweises auf die Patenterteilung: **06.09.1995**
(21) Anmeldenummer: 93104510.8
(22) Anmeldetag: 19.03.1993
(51) Int. Cl.: H02M 7/523, H05B 6/06

(54) **Verfahren zum Ansteuern der Stromrichterventile eines lastgeführten Parallelschwingkreiswechselrichters eines Induktionsofens**
Method for triggering converter valves of a load commutated parallel resonant circuit converter of an induction oven
Procédé pour l'excitation des valves de convertisseur d'un convertisseur à commutation par la charge avec un circuit oscillant parallèle du four à induction

(30) Priorität: 25.03.1992 DE 4209644
(43) Veröffentlichungstag der Anmeldung: 29.09.1993
(73) Patentinhaber: ABB PATENT GmbH, 68309 Mannheim (DE)
(72) Erfinder: Fabianowski, Jan, Dr.-Ing., W-4600 Dortmund 13 (DE); Ibach, Robert, W-5840 Schwerte (DE)
(74) Vertreter: Rupprecht, Klaus, Dipl.-Ing.

(56) Entgegenhaltungen:
- DE-A- 2 834 561
- US-A- 4 275 438
- US-A- 4 390 769

## Beschreibung

Die Erfindung bezieht sich auf ein Verfahren zum Ansteuern der Stromrichterventile eines lastgeführten Parallelschwingkreiswechselrichters eines Induktionsofens gemäß dem Oberbegriff des Patentanspruchs.

Ein Parallelschwingkreisumrichter für die induktive Erwärmung ist aus der Siemens-Zeitschrift 45 (1971), Heft 9, Seite 601 bis 606 bekannt. Dabei handelt es sich um eine Zwischenkreisumrichterschaltung mit eingeprägtem Strom im Zwischenkreis. Der vom netzseitigen Gleichrichter aus einer Netzwechselspannung erzeugte Gleichsstrom wird im lastseitigen Wechselrichter in einen mittelfrequenten Wechselstrom umgewandelt. Die Last besteht aus einem Induktor, der die Wirkleistung induktiv auf das zu erwärmende Gut (z.B. Metallschmelze) überträgt. Zur Deckung des hohen Blindleistungsbedarfs ist der Induktor mit Hilfe von einem oder mehreren Kompensationskondensatoren zu einem Parallelschwingkreis ergänzt. Im lastgeführten Wechselrichter wird der eingeprägte Zwischenkreisstrom wechselweise im Takt der Betriebsfrequenz über sich diagonal gegenüberliegende Ventilzweige auf die Last geschaltet und erzeugt in ihr näherungsweise eine sinusförmige Spannung. Die sich einstellende Betriebsfrequenz hängt wegen der Lasttaktung direkt mit der Eigenfrequenz des Lastkreises zusammen.

Der Erfindung liegt die Aufgabe zugrunde, ein Verfahren zum Ansteuern der Stromrichterventile eines lastgeführten Parallelschwingkreiswechselrichters eines Induktionsofens der eingangs genannten Art anzugeben, das eine stufenlose Einstellung bzw. Regelung der an die Last, d.h. den Induktionsofen, abgegebenen Leistung ermöglicht.

Diese Aufgabe wird in Verbindung mit den Merkmalen des Oberbegriffes erfindungsgemäß durch die im Kennzeichen des Patentanspruchs angegebenen Merkmale gelöst.

Die mit der Erfindung erzielbaren Vorteile bestehen insbesondere darin, daß eine stufenlose Energieregelung für den Induktionsofen ermöglicht wird. Die in den Induktionsofen eingespeiste Leistung verkleinert sich mit zunehmender Vergrößerung des Zeitversatzes, der zwischen der Zündung der beiden sich diagonal gegenüberliegenden Stromrichterventile liegt. Die eingespeiste Leistung wird maximal, wenn die beiden sich diagonal gegenüberliegenden Ventile gleichzeitig ohne jeden Zeitversatz gezündet werden. Die eingespeiste Leistung wird minimal bei größtmöglichem Zeitversatz, wobei Randbedingungen, wie genügend hohe Spannung am Kondensator des Parallelschwingkreises und Ventil-Freiwerdezeiten zu beachten sind.

Die Erfindung wird nachstehend anhand der in der Zeichnung dargestellten Ausführungsbeispiele erläutert. Es zeigen:
- Figur 1: einen über einen Wechselrichter gespeisten Parallelschwingkreis eines Induktionsofens,
- Figuren 2 bis 6: den zeitlichen Verlauf der im Parallelschwingkreis und in den einzelnen Stromrichterventilen des Wechselrichters fließenden Ströme,
- Figur 7: den zeitlichen Verlauf der Spannung am Kondensator des Parallelschwingkreises,
- Figur 8: die prinzipiellen Möglichkeiten der Zündzeitpunkt-Beeinflussung der Stromrichterventile des Wechselrichters zur Leistungsregelung,
- Figuren 9 bis 11: die Aufteilung des konstanten Eingangsstromes des Wechselrichters in einen Stromfluß über den Parallelschwingkreis und einen "Kurzschlußkreis".

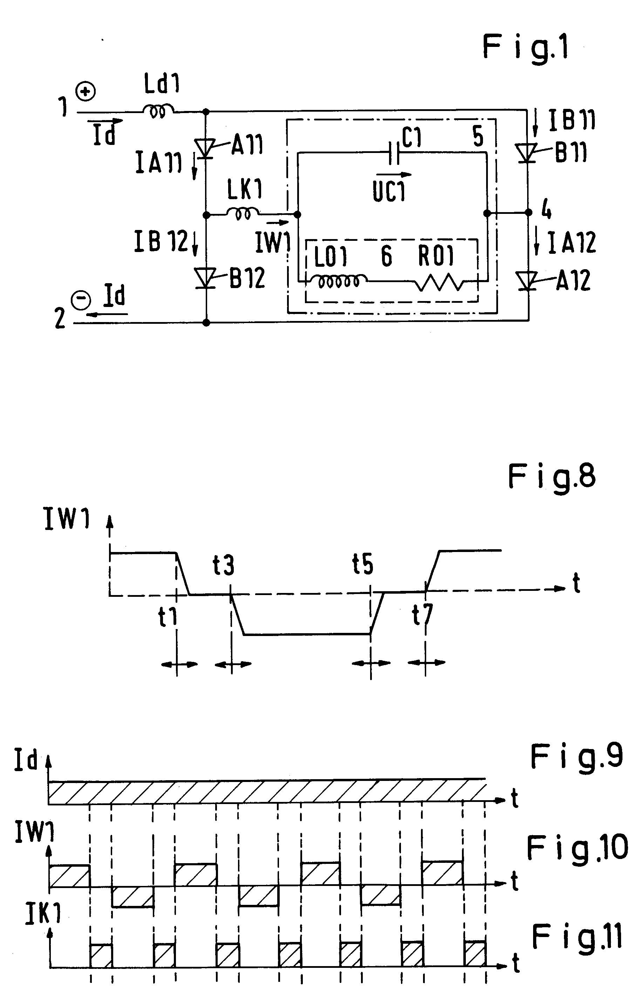

In Figur 1 ist ein über einen Wechselrichter gespeister Parallelschwingkreis eines Induktionsofens dargestellt. Es ist ein aus vier Stromrichterventilen A11, A12, B11, B12 bestehender Wechselrichter zu erkennen, wobei die Anoden der Ventile A11 und B11 über einer Glättungsdrossel Ld1 am positiven Pol 1 und die Kathoden der Ventile B12 und A12 am negativen Pol 2 einer Gleichstromquelle liegen. Positiver Pol 1 und negativer Pol 2 werden beispielsweise über einen Gleichrichter aus einem Drehstromnetz gespeist. Der Verbindungspunkt der Kathode des Ventils A11 und der Anode des Ventils B12 bildet den ersten Lastanschluß 3 sowie der Verbindungspunkt der Kathode des Ventils B11 und der Anode des Ventils A12 den zweiten Lastanschluß 4 des Wechselrichters.

Zwischen beiden Lastanschlüssen 3, 4 ist ein Parallelschwingkreis 5 geschaltet, wobei eine Kommutierungsinduktivität LK1 zwischen Lastanschluß 3 und Parallelschwingkreis 5 angeordnet ist. Der Parallelschwingkreis 5 besteht aus einer Spule 6 eines Induktionsofens und einem parallelgeschalteten Kondensator C1, wobei die Spule 6 eine Induktivität LO1 und einen ohmschen Widerstand RO1 aufweist.

Der Eingangsstrom des Wechselrichters, d.h. der von der Gleichstromquelle gespeiste, über die Glättungsdrossel Ld1 fließende Strom ist mit Id bezeichnet. Die Stromflüsse über die Ventile A11, A12, B11, B12 lauten IA11, IA12, IB11, IB12. Der Ausgangsstrom des Wechselrichters, d.h. der Stromfluß über die Kommutierungsinduktivität LK1 und den Parallelschwingkreis 5 ist mit IW1 bezeichnet. Die Spannung am Kondensator C1 beträgt UC1.

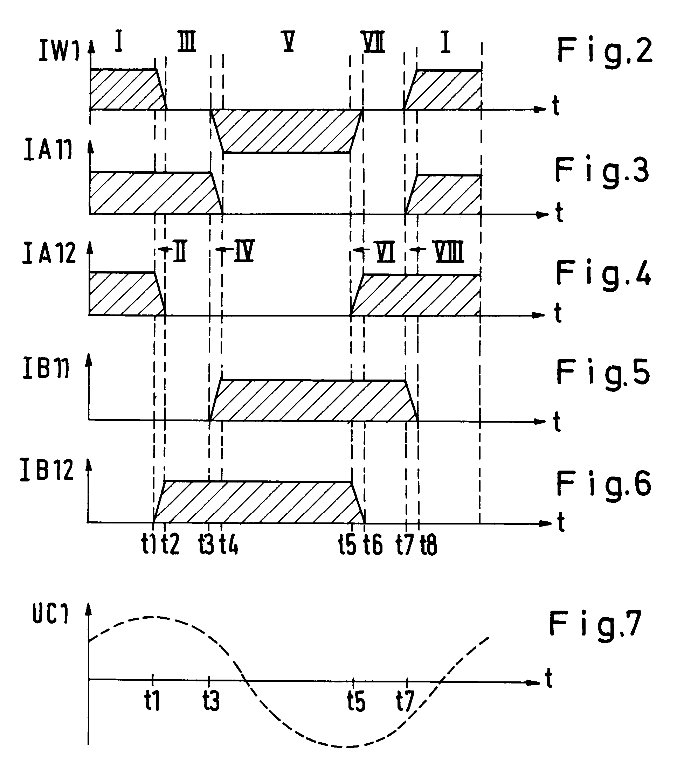

In den Figuren 2 bis 6 ist der zeitliche Verlauf der im Parallelschwingkreis und in den einzelnen Stromrichterventilen des Wechselrichters fließenden Ströme dargestellt, und zwar im einzelnen in Figur 2 der Strom IW1, in Figur 3 der Strom IA11, in Figur 4 der Strom IA12, in Figur 5 der Strom IB11 und in Figur 6 der Strom IB12. Für die prinzipielle Erläuterung der Stromflüsse lassen sich acht unterschiedliche Schaltphasen unterscheiden, und zwar eine Phase I bis zum Zeitpunkt t1, während der ein positiver Stromfluß IW1 auftritt, eine Kommutierungsphase II zwischen t1 und t2, eine Phase III zwischen t2 und t3, während der kein Strom IW1 fließt, eine Kommutierungsphase IV zwischen t3 und t4, eine Phase V zwischen t4 und t5, während der ein negativer Stromfluß IW1 auftritt, eine Kommutierungsphase VI zwischen t5 und t6, eine Phase VII zwischen t6 und t7, während der kein Strom IW1 fließt und eine Kommutierungsphase VIII zwischen t7 und t8. Die Stromflüsse im weiteren Zeitraum nach t8 entsprechen wiederum der Phase I, so daß Phase I den Zeitraum zwischen t8 und t1 umfaßt.

Wie aus den Strom/Zeit-Verläufen der Figuren 2 bis 6 zu erkennen ist, sind während der Phase I die Ventile A11 und A12 leitend und es ergibt sich ein Stromfluß vom positiven Pol 1 über Ventil A11, den Parallelschwingkreis 5 und Ventil A12 zum negativen Pol 2, d.h. es gilt
Id = IA11 = IW1 = IA12. Zum Zeitpunkt t1 wird Ventil B12 gezündet. Es ergibt sich ein Kommutierungsstrom über den Kondensator C1 und die Ventile B12 und A12 und der Strom über den Parallelschwingkreis 5 und das Ventil A12 kommutiert während dieser Phase II auf Ventil B12, so daß IW1 und IA12 verlöschen, während IB12 ansteigt. Während der Phase III ergibt sich ein Stromfluß vom positiven Pol 1 über Ventil A11 und Ventil B12 zum negativen Pol 2, d.h. es gilt Id = IA11 = IB12.

Zum Zeitpunkt t3 wird Ventil B11 gezündet und es ergibt sich während der Kommutierungsphase IV ein Kommutierungsstrom über den Kondensator C1, das Ventil A11 und das Ventil B11, d.h. der Strom IA11 verlöscht und die Ströme IB11 und IW1 steigen an (IW1 steigt auf den negativen Wert an). Während der anschließenden Phase V gilt
Id = IB11 = IW1 = IB12, d.h. der Strom fließt vom positiven Pol 1 über das Ventil B11, den Parallelschwingkreis 5 und das Ventil B12 zum negativen Pol 2.

Zum Zeitpunkt t5 wird das Ventil A12 gezündet. Es ergibt sich ein Kommutierungsstrom über den Kondensator C1 und die Ventile A12 und B12 und der Strom über den Parallelschwingkreis 5 und das Ventil B12 wird während dieser Kommutierungsphase VI auf Ventil A12 kommutiert, so daß IW1 und IB12 verlöschen, während IA12 ansteigt. Während der nachfolgenden Phase VII ergibt sich ein Stromfluß vom positiven Pol 1 über Ventil B11 und Ventil A12 zum negativen Pol 2, d.h. es gilt Id = IB11 = IA12.

Zum Zeitpunkt t7 wird das Ventil A11 gezündet und es ergibt sich während der Kommutierungsphase VIII ein Kommutierungsstrom über den Kondensator C1, das Ventil B11 und das Ventil A11, d.h. der Strom IB11 verlöscht und die Ströme IA11 und IW1 steigen an (IW1 steigt auf den positiven Wert an). Während der anschließenden Phase I ergibt sich wiederum der Stromfluß vom positiven Pol 1 über das Ventil A11, den Parallelschwingkreis 5 und das Ventil A12 zum negativen Pol 2, wie bereits vorstehend beschrieben.

In Figur 7 ist der zeitliche Verlauf der Spannung am Kondensator C1 des Parallelschwingkreises dargestellt. Die Frequenz dieser Spannung UC1 ist abhängig von der Kapazität des Kondensators C1 sowie dem Widerstand und der Induktivität LO1 der Spule 6. Die Ansteuerung der Ventile des Wechselrichters erfolgt unter Beachtung dieser Frequenz sowie der Spannungs-Nulldurchgänge und positiven bzw. negativen Maxima der Kondensatorspannung UC1. Dabei ist es insbesondere von Wichtigkeit, daß die Spannung UC1 zu den Zeitpunkten t1 (Zündung von B12) und t2 (Zündung von B11) genügend positiv ist, da der Kondensator C1 die erforderliche Kommutierungsspannung bereitstellen muß, um den Kommutierungsstrom über die Ventile B12 und A12 bzw. die Ventile A11 und B11 zu treiben. Desgleichen ist es von Wichtigkeit, daß die Spannung UC1 zu den Zeitpunkten t5 (Zündung von A12) und t7 (Zündung von A11) genügend negativ ist, da der Kondensator C1 die erforderliche Kommutierungsspannung bereitstellen muß, um den Kommutierungsstrom über die Ventile A12 und B12 bzw. die Ventile B11 und A11 zu treiben. Dabei muß die jeweilige Kommutierung vor dem Nulldurchgang der Spannung UC1 beendet sein. Desweiteren ist zu beachten, daß nach erfolgter Kommutierung bis zur Umkehr der Spannung am gerade gesperrten Stromrichterventil die erforderliche Freiwerdezeit eingehalten wird.

Aus der vorstehenden Erläuterung ist ersichtlich, daß dem Parallelschwingkreis 5 und damit der Spule 6 des Induktionsofens nur während der Phasen I, II, IV, V, VI und VIII, nicht jedoch während der Phasen III und VII Leistung aus der Gleichstromquelle zugeführt wird. Durch entsprechende Verbreiterung oder Verkleinerung dieser Phase III und VII kann somit die dem Induktionsofen zugeführte Leistung eingestellt und damit geregelt werden.

Durch das Zünden der Ventile B12 zum Zeitpunkt t1 bzw. B11 zum Zeitpunkt t3 werden der Beginn bzw. das Ende der Phase III und durch das Zünden der Ventile A12 zum Zeitpunkt t5 bzw. A11 zum Zeitpunkt t7 werden der Beginn bzw. das Ende der Phase VII festgelegt. Wahlweise können entweder nur die Zeitpunkte t1 und t5 oder nur die Zeitpunkte t3 und t7 oder sämtliche Zeitpunkte t1, t3, t5 und t7 zur Leistungsregelung variiert werden, wobei die vorstehend bereits erwähnten Bedingungen für die Spannung UC1 erfüllt sein müssen, d.h. die Spannung UC1 muß zum Zeitpunkt t3 noch genügend positiv und zum Zeitpunkt t7 noch genügend negativ sein, um die erforderlichen Kommutierungsströme zu treiben. In Figur 8 sind diese prinzipiellen Möglichkeiten der Zündzeitpunktbeeinflussung der Stromrichterventile des Wechselrichters zur Leistungsregelung dargestellt.

Ein alternatives Ansteuerverfahren ergibt sich, wenn zum Zeitpunkt t1 das Ventil B11 und zum Zeitpunkt t3 das Ventil B12 gezündet werden. Ferner können alternativ zum Zeitpunkt t5 das Ventil A11 und zum Zeitpunkt t7 das Ventil A12 gezündet werden. Bei diesen alternativen Verfahren ergeben sich zwar jeweils andere Stromverläufe IA11, IA12, IB11, IB12 als unter den Figuren 3 bis 6 beschrieben, der Stromverlauf von IW1 jedoch bleibt unverändert.

In den Figuren 9, 10, 11 ist die Aufteilung des konstanten Eingangsstromes Id des Wechselrichters in einen Stromfluß IW1 über den Parallelschwingkreis 5 und einen Kurzschlußstrom IK1 schematisch dargestellt, wobei die Kommutierungsphasen jeweils vernachlässigt sind. Während der Stromfluß IW1 über die sich diagonal gegenüberliegenden Ventile A11, A12 oder B11, B12 verläuft, fließt der Kurzschlußstrom IK1 vom positiven Pol 1 der Gleichstromquelle über zwei direkt in Serie liegende Ventile A11, B12 oder B11, A12 zum negativen Pol 2 der Gleichstromquelle. Beim Beispiel gemäß Figur 9, 10, 11 sind die Kurzschlußstromblöcke etwa halb so breit wie die Stromblöcke über den Parallelschwingkreis. Es ist ein sehr weiter Leistungssteuerbereich (1:100 und mehr) möglich, was einem Zeitversatz bis ca. 50°el. entspricht.

## Patentansprüche

1. Verfahren zum Ansteuern der Stromrichterventile eines lastgeführten, aus einer Gleichstromquelle gespeisten Parallelschwingkreiswechselrichters eines Induktionsofens, wobei durch Zünden von jeweils zwei sich diagonal gegenüberliegenden Stromrichterventilen (A11, A12 oder B11, B12) des Wechselrichters ein Stromfluß (Id) aus der Gleichstromquelle über den Parallelschwingkreis (5) eingestellt wird, dadurch gekennzeichnet, daß jeweils zwei sich diagonal gegenüberliegende Stromrichterventile (A11,A12 oder B11,B12) zeitverzögert gezündet werden, so daß sich zeitweise ein "Kurzschlußstrom" vom positiven Pol (1) der Gleichstromquelle über zwei direkt in Serie liegende Stromrichterventile (A11,B12 oder B11,A12) zum negativen Pol (2) der Gleichstromquelle ergibt.

2. Verfahen nach Anspruch 1, dadurch gekennzeichnet, daß der Zeitversatz bei der Ventilzündung im Bereich 0°...50° el. liegt.

## Claims

1. Method of driving the converter valves of a load-commutated parallel resonant circuit inverter of an induction furnace fed from a direct-current source, in which a current flow (Id) from the direct-current source via the parallel resonant circuit (5) is set by triggering two diagonally opposite converter valves (All, A12 or B11, B12) of the inverter in each case, characterized in that two diagonally opposite converter valves (A11, A12 or B11, B12) are in each case triggered with a time delay so that a "short-circuit current" intermittently occurs from the positive terminal (1) of the direct-current source to the negative terminal (2) of the direct-current source via two converter valves (A11, B12 or B11, A12) situated directly in series.

2. Method according to Claim 1, characterized in that the time offset in the valve triggering is in the range 0° ... 50° el.

## Revendications

1. Procédé de commande des valves d'un onduleur commandé par la charge, alimenté à partir d'une source de courant continu et alimentant un circuit oscillant parallèle comprenant un four à induction, l'amorçage de chaque fois deux valves (A11, A12 ou B11, B 12) diagonalement opposées de l'onduleur établissant un flux de courant (Id) à partir de la source de courant continu par le circuit oscillant parallèle (5), caractérisé par le fait que chaque fois deux valves (A11, A12 ou B11, B12) diagonalement opposées sont amorcées avec décalage, de sorte qu'il s'établit temporairement un "courant de court-circuit" du pôle positif (1) de la source de courant continu par deux valves (A11, B12 ou B11, A12) montées directement en série vers le pôle négatif (2) de la source de courant continu.

2. Procédé suivant la revendication 1, caractérisé par le fait que le décalage lors de l'amorçage des valves est compris entre 0° et 50°el.
